# EUROPEAN PATENT APPLICATION

(11) **EP 1 146 313 A2**
(43) Date of publication of application: **17.10.2001**
(21) Application number: 01109160.0
(22) Date of filing: 12.04.2001
(51) Int. Cl.: G01B 11/24

(54) **Image pickup apparatus and method, and recording medium**

(30) Priority: 13.04.2000 JP 2000112069
(71) Applicant: SONY CORPORATION, Tokyo (JP)
(72) Inventor: Ushiro, Teruyuki, Gotanda, Shinagawa-ku, Tokyo (JP); Wu, Weiguo, Gotanda, Shinagawa-ku, Tokyo (JP)
(74) Representative: Melzer, Wolfgang, Dipl.-Ing.

(57) **Abstract**

An image pickup apparatus for picking up an image signal used for measurement of three-dimensional shape, comprising: projecting means for projecting non-periodic pattern light on an object of measurement; generating means for generating image signals of a plurality of frames by using optical images of the object of measurement; limiting means for limiting input of the optical images of the object of measurement to the generating means; and timing control means for controlling the projecting means, the limiting means, and the generating means so that a signal of a pattern image of the object of measurement being irradiated with the non-periodic pattern light and a signal of a texture image of the object of measurement not being irradiated with the non-periodic pattern light are generated as the image signals of the frames in succession; wherein the timing control means allows the projecting means to project the non-periodic pattern light on the object of measurement for a period of time shorter than an open time within the open time, the open time being a period during which the limiting means does not limit input of the optical images of the object of measurement to the generating means.

## Description

### BACKGROUND OF THE INVENTION

The present invention relates to an image pickup apparatus and an image pickup method and a recording medium, and particularly to an image pickup apparatus and an image pickup method and a recording medium suitable for use in picking up an image used in measuring three-dimensional shape of an object, for example.

Methods for determining three-dimensional shape of an object are broadly divided into active methods and passive methods. The active methods include: a method of determining a distance to an object of measurement by projecting laser light or the like on the object of measurement and then measuring a time required for the reflected light to return; a method of determining three-dimensional shape of an object of measurement by irradiating the object of measurement with slit pattern light and measuring shape of the projected pattern on the object of measurement (light cutting method); a method of determining three-dimensional shape of an object of measurement by irradiating the object of measurement with striped black and white patterns having different periods and using a plurality of picked up images; and a method of determining three-dimensional shape of an object of measurement by irradiating the object of measurement with a striped color pattern and using a picked up image (spatial coding method).

The passive methods typically include a method referred to generally as a "stereo method" or a "stereo three-dimensional image measurement."

The stereo method picks up an object of measurement by means of at least two or more cameras disposed at different positions (a base and the other reference cameras), then identifies corresponding pixels between a plurality of obtained images (base image obtained by the base camera and reference image obtained by the reference camera) (this process is generally referred to as "identification of corresponding points"), and applies the principles of triangulation to positional difference (parallax) between the pixel on the base image and the pixel on the reference image that are brought into correspondence with each other to thereby determine a distance from the base camera (or the reference camera) to a point on the object of measurement corresponding to the pixels. Thus, when distances to points corresponding to all the pixels representing the entire surface of the object of measurement are determined, it is possible to measure shape and depth of the object of measurement.

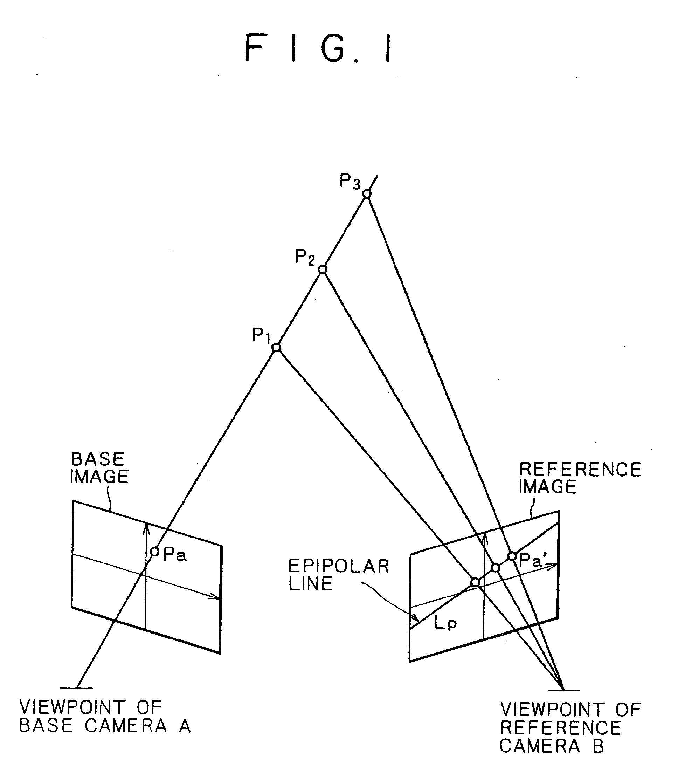

The identification of corresponding points, which is most important in the stereo method, is performed oh the basis of the principle that there are a plurality of points in real space that are mapped into a point Pa on the base image (points P₁, P₂, P₃, and the like in real space shown in Fig. 1), and therefore a point Pa' on the reference image corresponding to the point Pa is present on a straight line (referred to as an epipolar line) formed by mapping the points P₁, P₂, P₃, and the like in real space.

Examples of concrete methods proposed for the identification of corresponding points include: a pixel-based matching method described in "C.Lawrence Zitnick and Jon A.Webb: Multi-baseline Stereo Using Surface Extraction, Technical Report, CMU-CS-96-196, (1996)"; an area-based matching method described in "Okutomi and Kanade: Stereo Matching Using Multiple Baseline Lengths, Transactions of the Institute of Electronics, Information and Communication Engineers D-II, Vol.75-D-II, No.8, pp.1317-1327, (1992)"; and a feature-based matching method described in "H.H.Baker and T.O.Binford: Depth from edge intensity based stereo, In Proc. IJCAI'81, (1981)."

With any of the above-mentioned methods, however, it is difficult to identify corresponding points when the object of measurement is for example a wall of a single color or the human face, which has few local features such as shading, shape, and color. Thus, the above methods have a problem of causing a mismatch area.

In order to solve such a problem, a method is proposed in "S.B.Kang, J.A.Webb, C.L.Zitnick and T.Kanade: A Multibaseline Stereo System with Active Illumination and Real-time Image Acquisition, Proc IEEE Int Conf. Comput. Vis., Vol.5, pp.88-93, (1995)," for example. The method irradiates an object of measurement having no local features with light having a periodic pattern, picks up images of the object, and identifies corresponding points on the obtained images. However, the method of irradiating the object with a periodic pattern can cause an error in identification of corresponding points because of periodicity of the pattern, and therefore is not necessarily effective.

Accordingly the present applicant has already proposed a method as Japanese Patent Application No. Hei 11-344392 for example (hereinafter referred to as a related application), which comprises: irradiating an object of measurement with a non-periodic pattern for image pickup; generating a range image by identifying corresponding points on obtained images; picking up an image of the object of measurement not irradiated with the non-periodic pattern; and pasting an obtained texture image on the range image. The invention described in the related application makes possible identification of corresponding points even when the object of measurement has few local features such as shading, shape, and color.

However, according to the related application, it is necessary to pick up the object of measurement twice, that is, the object of measurement being irradiated with the non-periodic pattern and the object of measurement not being irradiated with the non-periodic pattern. Since hand movement or movement of the object of measurement may occur while the object of measurement is picked up twice, it is desirable to make the time required to pick up the object of measurement twice as short as possible.

### SUMMARY OF THE INVENTION

It is therefore an object of the present invention to provide an image pickup apparatus and method, and recording medium, which shorten as much as possible the time required to pick up the object of measurement twice, that is, to pick up the object of measurement being irradiated with a non-periodic pattern and the object of measurement not being irradiated with the non-periodic pattern.

In carrying out the invention and according to a first aspect thereof, there is provided an image pickup apparatus comprising: projecting means for projecting non-periodic pattern light on an object of measurement; generating means for generating image signals of a plurality of frames by using optical images of the object of measurement; limiting means for limiting input of the optical images of the object of measurement to the generating means; and timing control means for controlling the projecting means, the limiting means, and the generating means so that a signal of a pattern image of the object of measurement being irradiated with the non-periodic pattern light and a signal of a texture image of the object of measurement not being irradiated with the non-periodic pattern light are generated as image signals of consecutive frames; wherein the timing control means allows the projecting means to project the non-periodic pattern light on the object of measurement for a period of time shorter than an open time within the open time, the open time being a period during which the limiting means does not limit input of the optical images of the object of measurement to the generating means.

In the above-mentioned image pickup apparatus, the timing control means may control the projecting means, the limiting means, and the generating means so that after a signal of a pattern image of the object of measurement being irradiated with the non-periodic pattern light is generated, a signal of a texture image of the object of measurement not being irradiated with the non-periodic pattern light is generated as an image signal of a consecutive frame.

In the above-mentioned image pickup apparatus, the limiting means may be a mechanical shutter.

In the above-mentioned image pickup apparatus, when the limiting means is a mechanical shutter, the timing control means may control the projecting means, the limiting means, and the generating means so that after a signal of a texture image of the object of measurement not being irradiated with the non-periodic pattern light is generated, a signal of a pattern image of the object of measurement being irradiated with the non-periodic pattern light is generated as an image signal of a consecutive frame.

Alternatively, the image pickup apparatus according to the present invention may further include irradiating means for irradiating the object of measurement with flashlight.

When the image pickup apparatus further includes the irradiating means and the limiting means is a mechanical shutter, the timing control means may control the projecting means, the limiting means, the generating means, and the irradiating means so that after a signal of a pattern image of the object of measurement being irradiated with the non-periodic pattern light is generated, a signal of a texture image of the object of measurement not being irradiated with the non-periodic pattern light but with flashlight is generated as an image signal of a consecutive frame.

When the image pickup apparatus further includes the irradiating means and the limiting means is a mechanical shutter, the timing control means may control the projecting means, the limiting means, the generating means, and the irradiating means so that after a signal of a texture image of the object of measurement not being irradiated with the non-periodic pattern light but with flashlight is generated, a signal of a pattern image of the object of measurement being irradiated with the non-periodic pattern light is generated as an image signal of a consecutive frame.

Alternatively, the generating means may generate a plurality of pattern image signals by using a plurality of optical images of the object of measurement being irradiated with the non-periodic pattern light, the optical images being simultaneously inputted from a plurality of different viewpoints.

In carrying out the invention and according to a second aspect thereof, there is provided an image pickup method comprising: a projecting step for projecting non-periodic pattern light on an object of measurement; a generating step for generating image signals of a plurality of frames by using optical images of the object of measurement; a limiting step for limiting input of the optical images of the object of measurement to processing in the generating step; and a timing control step for controlling processing in the projecting step, processing in the limiting step, and the processing in the generating step so that a signal of a pattern image of the object of measurement being irradiated with the non-periodic pattern light and a signal of a texture image of the object of measurement not being irradiated with the non-periodic pattern light are generated as image signals of consecutive frames; wherein processing in the timing control step allows the processing in the projecting step to project the non-periodic pattern light on the object of measurement for a period of time shorter than an open time within the open time, the open time being a period during which the processing in the limiting step does not limit input of the optical images of the object of measurement to the processing in the generating step.

In carrying out the invention and according to a third aspect thereof, there is provided a program on a recording medium, the program comprising: a control step for controlling projecting means, limiting means, and generating means so that a signal of a pattern image of an object of measurement being irradiated with non-periodic pattern light and a signal of a texture image of the object of measurement not being irradiated with the non-periodic pattern light are generated as image signals of consecutive frames; wherein processing in the control step allows the projecting means to project the non-periodic pattern light on the object of measurement for a period of time shorter than an open time within the open time, the open time being a period during which the limiting means does not limit input of optical images of the object of measurement to the generating means.

The image pickup apparatus and the image pickup method and the program on a recording medium according to the present invention project non-periodic pattern light on an object of measurement, generate image signals of a plurality of frames by using optical images of the object of measurement, and limit input of the optical images of the object of measurement to the generating processing. In addition, the image pickup apparatus and the image pickup method and the program on a recording medium control the projecting processing, the limiting processing, and the generating processing so that a signal of a pattern image of the object of measurement being irradiated with the non-periodic pattern light and a signal of a texture image of the object of measurement not being irradiated with the non-periodic pattern light are generated as image signals of consecutive frames. Further, the image pickup apparatus and the image pickup method and the program on a recording medium effect control so that the non-periodic pattern light is projected on the object of measurement for a period of time shorter than an open time within the open time, the open time being a period during which input of the optical images of the object of measurement to the generating processing is not limited.

The above and other objects, features and advantages of the present invention and the manner of realizing them will become more apparent, and the invention itself will best be understood from a study of the following description and appended claims with reference to the attached drawings showing some preferred embodiments of the invention.

### BRIEF DESCRIPTION OF THE DRAWINGS

Fig. 1 is a diagram of assistance in explaining an epipolar line;
Fig. 2 is an external front view of a three-dimensional camera to which the present invention is applied;
Fig. 3 is an external rear view of the three-dimensional camera;
Fig. 4 is a block diagram showing an electrical configuration of the three-dimensional camera.
Fig. 5 is a block diagram showing a configuration example of a pattern projecting unit;
Fig. 6 is a block diagram showing a configuration example of an image pickup unit;
Fig. 7 is a block diagram showing another configuration example of an image pickup unit;
Fig. 8 is a diagram of assistance in explaining timing of picking up a stereo image and a texture image;
Fig. 9 is another diagram of assistance in explaining timing of picking up a stereo image and a texture image;
Fig. 10 is further another diagram of assistance in explaining timing of picking up a stereo image and a texture image;
Fig. 11 is still another diagram of assistance in explaining timing of picking up a stereo image and a texture image; and
Fig. 12 is still another diagram of assistance in explaining timing of picking up a stereo image and a texture image.

### DETAILED DESCRIPTION OF THE PREFERRED EMBODIMENT

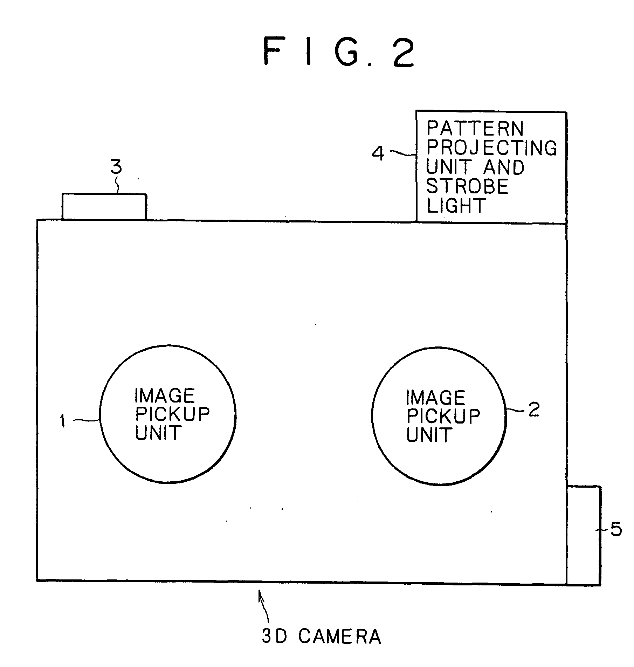

A three-dimensional camera (3D camera) to which the present invention is applied will be described with reference to Figs. 2 to 4. In response to shutter release by the user, the three-dimensional camera consecutively picks up two pattern images (stereo images) of an object of measurement irradiated with pattern light and a texture image of the object of measurement not irradiated with pattern light, and then supplies the picked up stereo images and the texture image picked up consecutively after the pickup of the stereo images to a personal computer or the like.

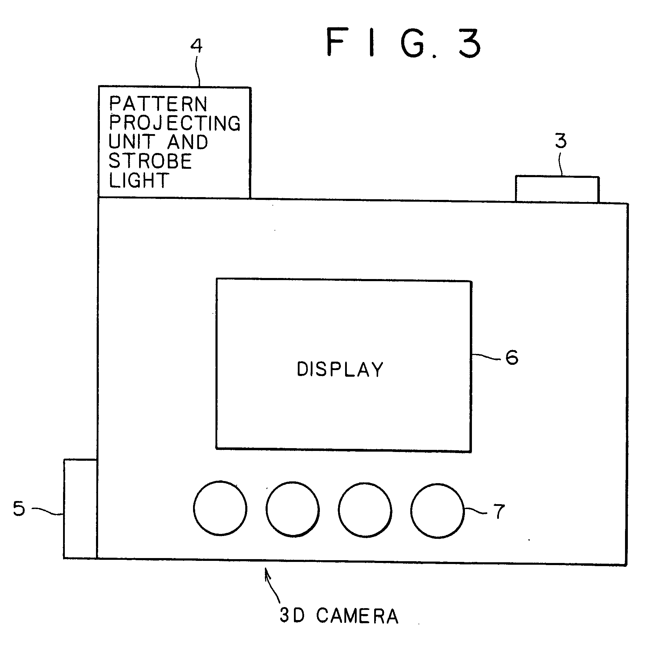

Fig. 2 is an external front view of the three-dimensional camera. Fig. 3 is an external rear view of the three-dimensional camera.

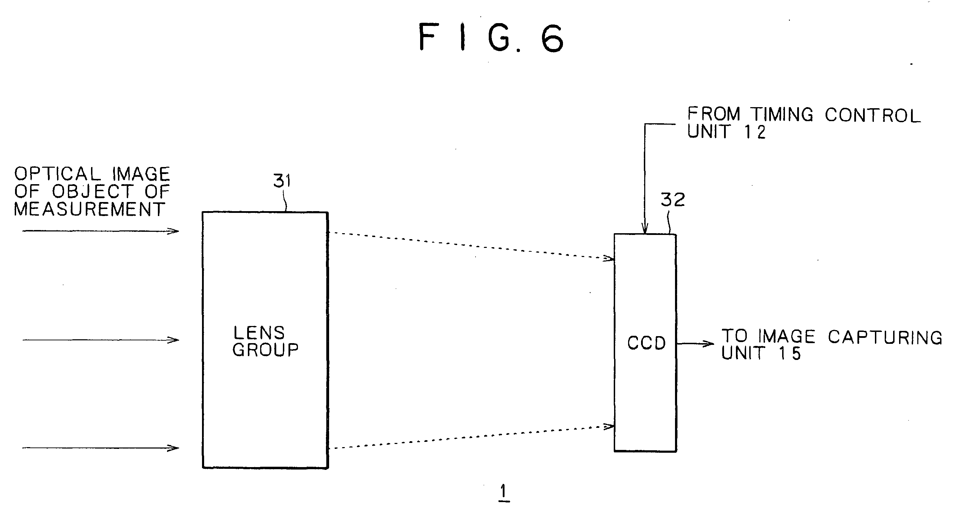

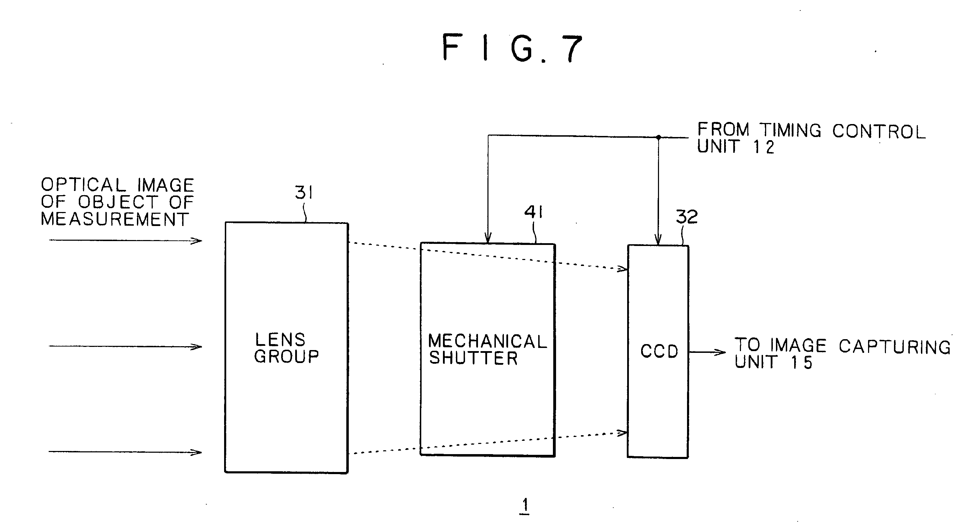

Provided on the front side (the side facing an object of measurement) of the three-dimensional camera are image pickup units 1 and 2 that each comprise a lens group 31, a CCD (Charge Coupled Device) 32, and the like (described later in detail with reference to Figs. 6 and 7) and thereby convert an optical image of an object of measurement into an electric image signal, the image pickup units 1 and 2 being disposed at a given distance from each other.

Provided on the top of the three-dimensional camera are an image capturing button 3 actuated in timing in which the user issues a command for image pickup, and a pattern projecting unit and strobe light 4 that irradiates an object of measurement with pattern light or flashlight (not pattern light).

An interface 5 is provided on a side of the three-dimensional camera. Examples of the interface 5 include RS-232C, IEEE1394, USB, Ethernet and other wired interfaces and wireless interfaces that send and receive infrared signals, radio signals and the like. The interface 5 transmits data of the stereo images and the texture image to a personal computer.

Provided on the rear side (the side facing the user) of the three-dimensional camera are a display 6 for displaying a picked up image or the like, and operation buttons 7 operated when various settings are inputted.

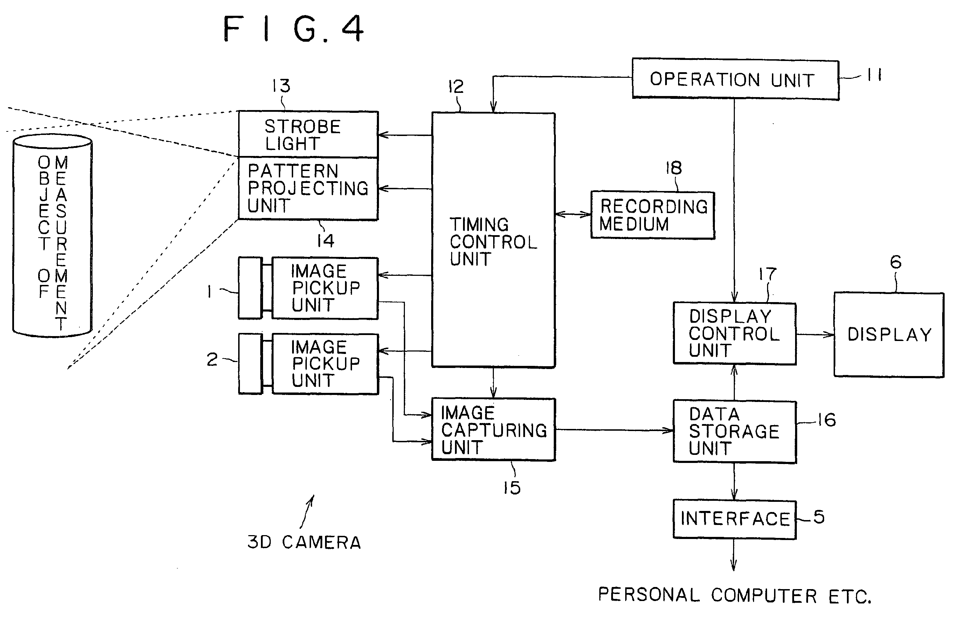

Fig. 4 shows an electrical configuration of the three-dimensional camera. An operation unit 11 detects operation by the user of the image capturing button 3 and the operation buttons 7, and then outputs information on the user operation to a timing control unit 12 or a display control unit 17. The timing control unit 12 controls timing of light emission of a strobe light 13 and a pattern projecting unit 14 and shutter timing of the image pickup units 1 and 2 (described later in detail) according to a control program recorded on a recording medium 18 and the user operation information inputted from the operation unit 11. The timing control unit 12 also controls timing of image capturing by an image capturing unit 15 according to the user operation information inputted from the operation unit 11.

The strobe light 13 is used as required when picking up a texture image of an object of measurement, and irradiates the object of measurement with flashlight under control of the timing control unit 12.

The pattern projecting unit 14 is used when picking up stereo images, which are used to obtain a range image of the object of measurement, and projects pattern light on the object of measurement under control of the timing control unit 12.

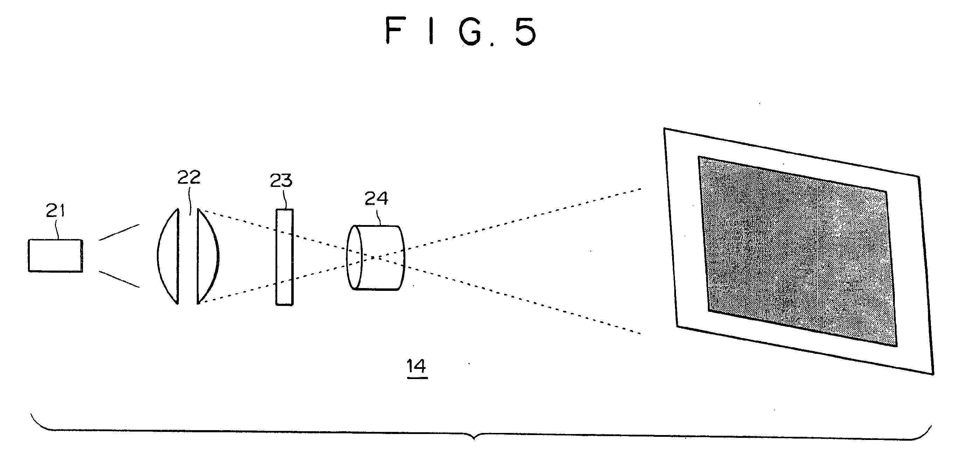

Fig. 5 shows a configuration example of the pattern projecting unit 14. The pattern projecting unit 14 comprises a light source 21 formed by a xenon tube, an LED or the like, a condenser lens 22, a slide 23 on which a non-periodic pattern produced by using uniform random numbers or normal random numbers is printed, and a projection lens 24.

Light generated in the light source 21 of the pattern projecting unit 14 is passed through the slide 23 and condensed on the projection lens 24 by the condenser lens 22, and then projected on a surface of the object of measurement by the projection lens 24. The light source 21 emits light for a time shorter than shutter time of the image pickup units 1 and 2 (described later) within the shutter time.

Under control of the timing control unit 12, the image capturing unit 15 captures image signals inputted from the image pickup units 1 and 2 (stereo image and texture image signals) into its built-in frame memory, and thereafter outputs the image signals to a data storage unit 16. The data storage unit 16 stores the image signals inputted from the image capturing unit 15. The display control unit 17 reads the image signals from the data storage unit 16 for display on the display 6 according to the user operation information inputted from the operation unit 11.

The recording medium 18, on which a program is recorded, is formed by a removable medium such as a magnetic disk (including a floppy disk), an optical disk (including CD-ROM (Compact Disc-Read Only Memory) and DVD (Digital Versatile Disc)), a magneto-optical disk (including MD (Mini Disc)), or a semiconductor memory, or formed by a ROM, a hard disk or the like incorporated in the three-dimensional camera.

Next, Fig. 6 shows a configuration example of the image pickup unit 1. The lens group 31 of the image pickup unit 1 condenses an optical image of the object of measurement on a CCD 32. The CCD 32 in normal operation stores a charge resulting from photoelectric conversion according to the amount of light received for a specified time Tf, and then outputs the stored charge as an image signal for one frame to the image capturing unit 15. The CCD 32 has a built-in electronic shutter function, which allows the CCD 32 to store charge for a shutter time Ts, which is a latter part of the storage time Tf for storing a charge for one frame and to discard a charge stored during a first part of the storage time Tf (Tf - Ts).

As shown in Fig. 7, the image pickup unit 1 may be provided with a mechanical shutter 41 between the lens group 31 and the CCD 32. The mechanical shutter 41 may transmit light from the lens group 31 in timing controlled by the timing control unit 12. The mechanical shutter 41 provided in the image pickup unit 1 allows the CCD 32 to be exposed to light in any given timing.

Incidentally, a configuration of the image pickup unit 2 is the same as that of the image pickup unit 1, and therefore its description will be omitted.

Description will next be made of timing in which the three-dimensional camera consecutively picks up an image of the object of measurement irradiated with pattern light and an image of the object of measurement not irradiated with pattern light in response to depression of the image capturing button 3 by the user.

In obtaining a stereo image by picking up an image of the object of measurement being irradiated with pattern light, the timing control unit 12 operates the image pickup units 1 and 2 in synchronism with each other so that the CCD 32 stores charge only for the shutter time Ts using the electronic shutter function of the CCD 32 or the mechanical shutter 41, and also applies the pattern light for a time shorter than the shutter time Ts within the shutter time Ts. In this case, when the shutter time Ts is shortened, it is possible to shut out most of ambient light. In addition, by applying the pattern light only for a time shorter than the shutter time Ts within the shutter time Ts, it is possible for the CCD 32 to obtain a steady amount of light only from the pattern light. Thus, it is possible to reliably pick up a stereo image of the object of measurement being irradiated with the pattern light at all times without being affected by intensity of ambient light around the object of measurement.

In obtaining a texture image by picking up an image of the object of measurement not being irradiated with pattern light, the timing control unit 12 operates either one of the image pickup units 1 and 2, and it is necessary to determine whether or not to use a shutter (the electronic shutter function of the CCD 32 or the mechanical shutter 41) and when the shutter is used, appropriately change shutter time according to the intensity of ambient light and the like.

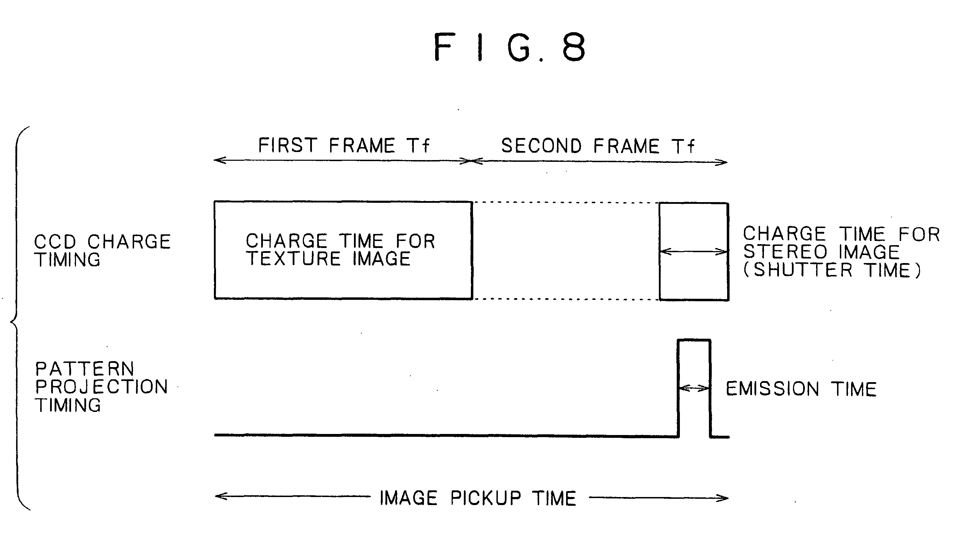

Consideration will now be given to a case where the image pickup units 1 and 2 do not have the mechanical shutter 41 (case of Fig. 6). In this case, when a texture image of the object of measurement not being irradiated with pattern light and a stereo image of the object of measurement being irradiated with pattern light are picked up in that order, the longest possible image pickup time (time for which the three-dimensional camera needs to be held without hand movement) is twice the time Tf for storing a charge for one frame (2Tf), as shown in Fig. 8.

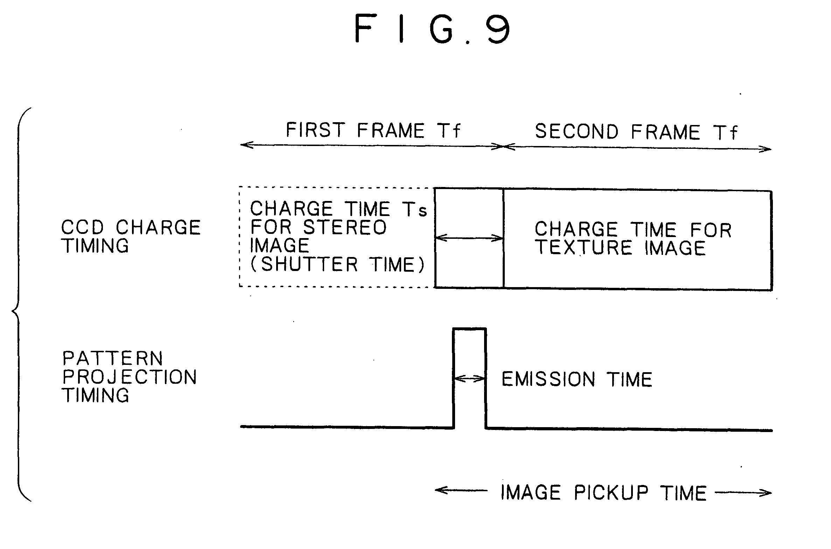

As shown in Fig. 9, on the other hand, when a stereo image of the object of measurement being irradiated with pattern light and a texture image of the object of measurement not being irradiated with pattern light are picked up in that order, the longest possible image pickup time is the shutter time Ts for picking up the stereo image added to the time Tf for storing a charge for one frame of the texture image (Ts + Tf). Since the shutter time Ts is shorter than the time Tf for storing a charge for one frame, the image pickup time when the images are taken in the order shown in Fig. 9 is shorter than that when the images are taken in the order shown in Fig. 8, thereby preventing hand movement from affecting the images.

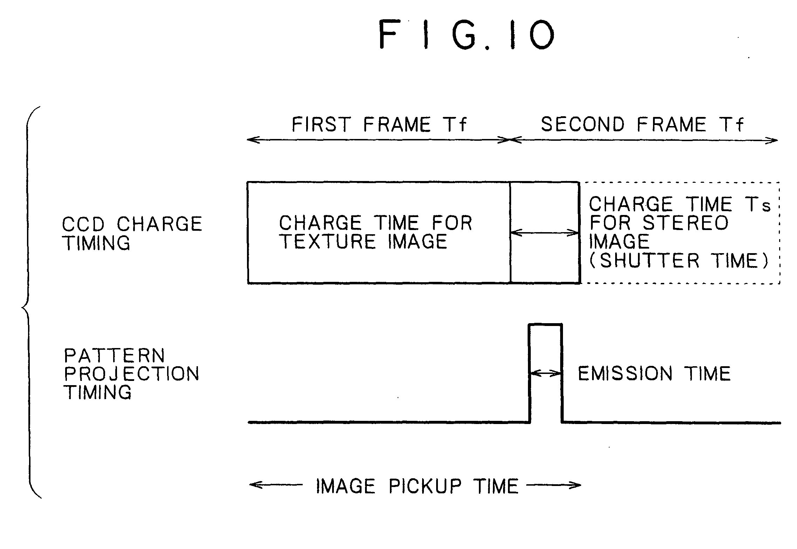

Consideration will next be given to a case where the image pickup units 1 and 2 have the mechanical shutter 41 (case of Fig. 7). In this case, as described above, the image pickup units 1 and 2 can each store a charge in the CCD 32 in any given timing (for example in a first part Ts of the storage time Tf for storing a charge for one frame). Therefore, as shown in Fig. 10, even when a texture image of the object of measurement not being irradiated with pattern light and a stereo image of the object of measurement being irradiated with pattern light are picked up in that order, the longest possible image pickup time is the time Tf for storing a charge for one frame of the texture image added to the shutter time Ts for picking up the stereo image (Ts + Tf). Thus, the image pickup time when the images are taken in the order shown in Fig. 10 is also shorter than that when the images are taken in the order shown in Fig. 8, thereby preventing hand movement from affecting the images.

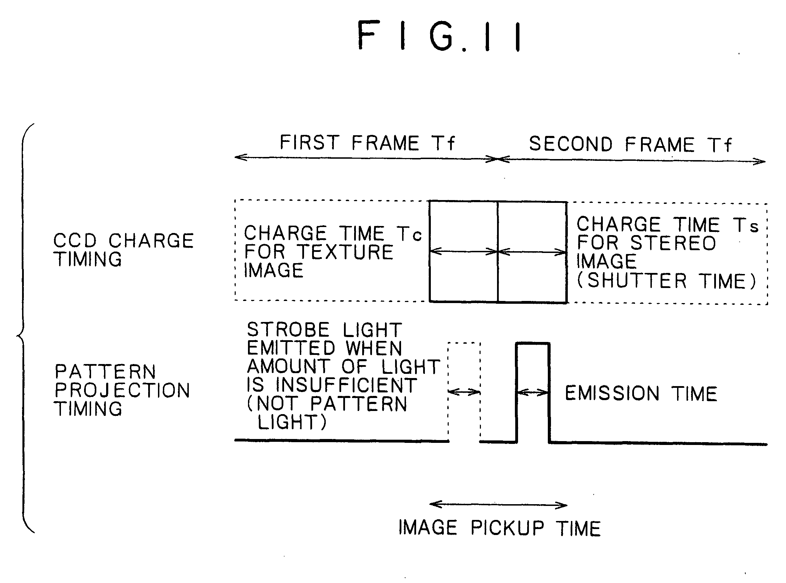

As shown in Fig. 11, when the mechanical shutter 41 is used also in taking a texture image of the object of measurement not being irradiated with pattern light, the image pickup time is a shutter time (charge time of the CCD 32) Tc for taking the texture image of the object of measurement not being irradiated with pattern light added to the shutter time Ts for picking up a stereo image of the object of measurement being irradiated with pattern light (Tc + Ts). Since the shutter time Tc is shorter than the time Tf for storing a charge for one frame, the image pickup time when the images are taken in the order shown in Fig. 11 is even shorter than that when the images are taken in the order shown in Fig. 10, thereby preventing hand movement from affecting the images. If the use of the mechanical shutter 41 in taking a texture image of the object of measurement not being irradiated with pattern light renders the time for storing a charge in the CCD 32 insufficient, the strobe light 13 may be emitted during the shutter time Tc.

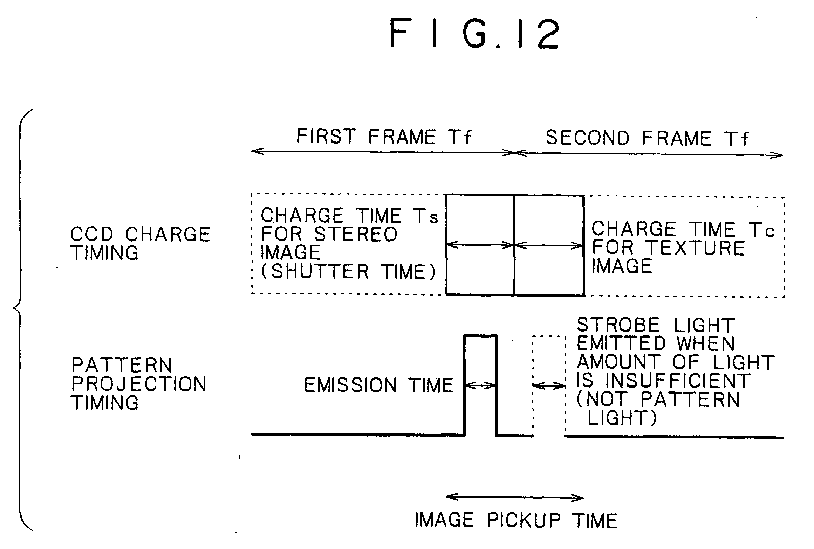

In a case where the image pickup units 1 and 2 have the mechanical shutter 41 (case of Fig. 7), when the mechanical shutter 41 is used also in taking a texture image of the object of measurement not being irradiated with pattern light, the texture image of the object of measurement not being irradiated with pattern light and a stereo image of the object of measurement being irradiated with pattern light may be picked up in that order, as shown in Fig. 12. The image pickup time in this case is the same (Tc + Ts) as when the images are taken in the order shown in Fig. 11, and therefore is even shorter than that when the images are taken in the order shown in Fig. 10, thereby preventing hand movement from affecting the images.

Image signals of the stereo images and the texture image picked up by the image pickup units 1 and 2 in the timing described above are recorded in the built-in frame memory of the image capturing unit 15, thereafter stored in the data storage unit 16, and then supplied from the interface 5 to a personal computer or the like.

The personal computer or the like, not shown, sets one of the stereo images as a base image and the other as a reference image for identification of corresponding points, generates a range image on the basis of the result of identification, and pastes the texture image on the range image to thereby generate an image showing three-dimensional shape of the object of measurement.

It is to be noted that images generated by the three-dimensional camera according to the present invention may be applied not only to the stereo method but also to other methods of obtaining three-dimensional shape of an object.

As described above, the image pickup apparatus and the image pickup method and a program on a recording medium according to the present invention control the timing of projecting pattern light, input of optical images of the object of measurement, and the image signal generating process, and thereby generate a signal of a pattern image of the object of measurement being irradiated with non-periodic pattern light and a signal of a texture image of the object of measurement not being irradiated with non-periodic pattern light as image signals of consecutive frames. Thus, it is possible to reduce the time required to pick up the object of measurement twice.

## Claims

1. An image pickup apparatus for picking up an image signal used for measurement of three-dimensional shape, comprising:
projecting means for projecting non-periodic pattern light on an object of measurement;
generating means for generating image signals of a plurality of frames by using optical images of said object of measurement;
limiting means for limiting input of said optical images of said object of measurement to said generating means; and
timing control means for controlling said projecting means, said limiting means, and said generating means so that a signal of a pattern image of said object of measurement being irradiated with said non-periodic pattern light and a signal of a texture image of said object of measurement not being irradiated with said non-periodic pattern light are generated as the image signals of said frames in succession;
wherein said timing control means allows said projecting means to project said non-periodic pattern light on said object of measurement for a period of time shorter than an open time within the open time, said open time being a period during which said limiting means does not limit input of said optical images of said object of measurement to said generating means.

2. An image pickup apparatus as claimed in claim 1, wherein said timing control means controls said projecting means, said limiting means, and said generating means so that after the signal of said pattern image of said object of measurement being irradiated with said non-periodic pattern light is generated, the signal of said texture image of said object of measurement not being irradiated with said non-periodic pattern light is generated as the image signal of said frame in succession.

3. An image pickup apparatus as claimed in claim 1, wherein said limiting means is a mechanical shutter.

4. An image pickup apparatus as claimed in claim 3, wherein said timing control means controls said projecting means, said limiting means, and said generating means so that after the signal of said texture image of said object of measurement not being irradiated with said non-periodic pattern light is generated, the signal of said pattern image of said object of measurement being irradiated with said non-periodic pattern light is generated as the image signal of said frame in succession.

5. An image pickup apparatus as claimed in claim 3, further comprising irradiating means for irradiating said object of measurement with flashlight.

6. An image pickup apparatus as claimed in claim 5, wherein said timing control means controls said projecting means, said limiting means, said generating means, and said irradiating means so that after the signal of said pattern image of said object of measurement being irradiated with said non-periodic pattern light is generated, the signal of said texture image of said object of measurement not being irradiated with said non-periodic pattern light but with said flashlight is generated as the image signal of said frame in succession.

7. An image pickup apparatus as claimed in claim 5, wherein said timing control means controls said projecting means, said limiting means, said generating means, and said irradiating means so that after the signal of said texture image of said object of measurement not being irradiated with said non-periodic pattern light but with said flashlight is generated, the signal of said pattern image of said object of measurement being irradiated with said non-periodic pattern light is generated as the image signal of said frame in succession.

8. An image pickup apparatus as claimed in claim 1, wherein said generating means generates a plurality of said pattern image signals by using a plurality of said optical images of said object of measurement being irradiated with said non-periodic pattern light, the optical images being simultaneously inputted from a plurality of different viewpoints.

9. An image pickup method for an image pickup apparatus for picking up an image used for measurement of three-dimensional shape, said method comprising:
a projecting step for projecting non-periodic pattern light on an object of measurement;
a generating step for generating image signals of a plurality of frames by using optical images of said object of measurement;
a limiting step for limiting input of said optical images of said object of measurement to processing in said generating step; and
a timing control step for controlling processing in said projecting step, processing in said limiting step, and the processing in said generating step so that a signal of a pattern image of said object of measurement being irradiated with said non-periodic pattern light and a signal of a texture image of said object of measurement not being irradiated with said non-periodic pattern light are generated as the image signals of said frames in succession;
wherein processing in said timing control step allows the processing in said projecting step to project said non-periodic pattern light on said object of measurement for a period of time shorter than an open time within the open time, said open time being a period during which the processing in said limiting step does not limit input of said optical images of said object of measurement to the processing in said generating step.

10. A recording medium for recording a computer readable program for controlling an image pickup apparatus, said image pickup apparatus including projecting means for projecting non-periodic pattern light on an object of measurement; generating means for generating image signals of a plurality of frames by using optical images of said object of measurement; and limiting means for limiting input of said optical images of said object of measurement to said generating means, said program comprising:
a control step for controlling said projecting means, said limiting means, and said generating means so that a signal of a pattern image of said object of measurement being irradiated with said non-periodic pattern light and a signal of a texture image of said object of measurement not being irradiated with said non-periodic pattern light are generated as the image signals of said frames in succession;
wherein processing in said control step allows said projecting means to project said non-periodic pattern light on said object of measurement for a period of time shorter than an open time within the open time, said open time being a period during which said limiting means does not limit input of said optical images of said object of measurement to said generating means.
